# EUROPEAN PATENT SPECIFICATION

(11) **EP 3 106 664 B1**
(45) Date of publication and mention of the grant of the patent: **12.02.2020**
(21) Application number: 16169804.8
(22) Date of filing: 16.05.2016
(51) Int. Cl.: F03G 3/08, F04C 25/02, F04C 23/00, F04C 28/24, F04C 18/02, B60K 6/10, B60L 50/30, F04B 45/04

(54) **KINETIC ENERGY RECOVERY SYSTEM**
SYSTEM ZUR RÜCKGEWINNUNG VON KINETISCHER ENERGIE
SYSTÈME DE RÉCUPÉRATION D'ÉNERGIE CINÉTIQUE

(30) Priority: 16.06.2015 GB 201510494
(43) Date of publication of application: 21.12.2016
(73) Proprietor: Edwards Limited, Burgess Hill West Sussex RH15 9TW (GB)
(72) Inventor: SCHOFIELD, Nigel Paul, Burgess Hill, Sussex RH15 9TW (GB)
(74) Representative: Norton, Ian Andrew

(56) References cited:
- DE-U1-202012 006 991
- US-A- 5 462 402
- US-A- 5 767 595

## Description

The present invention relates to a kinetic energy recovery and/or storage system. This may be of particular use in a vehicle or to prevent interruption to a power supply.

A kinetic energy recovery system (KERS) is used in vehicles to store energy by rotation of a flywheel, and is typically used to recover energy from a rotating part of the vehicle for example a drive shaft. In this example, a drive shaft is rotated by an engine to cause acceleration of the vehicle. During vehicle braking the energy of the rotating part is lost for instance as heat energy caused by friction between braking members. A kinetic energy recovery system is arranged to receive at least part of this lost energy and to return it to the rotating part when energy is required.

A recovery system comprises a flywheel supported for rotation about an axis. Energy is stored by increased rotational speed of the flywheel. The energy stored is proportional to the moment of inertia and the square of the angular velocity. In order to reduce the moment of inertia and therefore mass of the flywheel, the flywheel must be rotated at a high angular velocity to store sufficient energy (e.g. 100,000 rpm). At these high velocities, frictional resistance between a flywheel and ambient air generates large heat losses which decrease the efficiency of the recovery system. Therefore, the flywheel is located in a vacuum enclosure which is evacuated by a vacuum pump to reduce friction between the flywheel and the surrounding air. However, the energy required to operate the vacuum pump detracts from the energy which can be recovered and returned to other parts of the vehicle.

US5767595 and DE202012006991 each disclose a kinetic energy recovery system having a fly wheel located in a vacuum enclosure.

In a first aspect, the present invention provides a kinetic energy storage system comprising: a flywheel supported for rotation in a first vacuum enclosure for receiving energy from and dissipating energy to one or more parts of a vehicle; a scroll vacuum pumping arrangement having an inlet arranged to be in fluid communication with an outlet of the first vacuum enclosure for evacuating the first vacuum enclosure; a second vacuum enclosure having an inlet in fluid communication with an exhaust of the scroll pumping arrangement and arranged to be maintained at a pressure less than atmosphere for reducing the pressure at the exhaust of the scroll pumping arrangement, the second vacuum enclosure comprising an outlet through which gas can be pumped periodically for maintaining the second vacuum enclosure at a pressure less than atmosphere.

In a further aspect, the present invention provides a kinetic energy recovery system comprising: a flywheel supported for rotation in a first vacuum enclosure for receiving energy from and dissipating energy to one or more parts of a vehicle; a scroll vacuum pumping arrangement having an inlet arranged to be in fluid communication with an outlet of the first vacuum enclosure for evacuating the first vacuum enclosure; a second vacuum enclosure having an inlet in fluid communication with an exhaust of the scroll pumping arrangement and arranged to be maintained at a pressure less than atmosphere for reducing the pressure at the exhaust of the scroll pumping arrangement, the second vacuum enclosure comprising an outlet through which gas can be pumped periodically for maintaining the second vacuum enclosure at a pressure less than atmosphere.

In examples of the invention the scroll vacuum pumping arrangement is suitable for continuous operation using only a small amount power and undergoing relatively little wear. The second vacuum enclosure provides a backing or roughing pressure for the scroll vacuum pumping arrangement for reducing the energy required by the pumping arrangement and/or decreasing the pressure which can be attained at the inlet of the pumping arrangement. In this latter regard, a scroll vacuum pump which exhausts at atmosphere may be capable of an ultimate pressure of about 1 mbar, whereas a scroll vacuum pump which exhausts at for example 50 mbar may be capable of an ultimate pressure of about 0.01 mbar. Typically, where it is desirable to generate reduced ultimate pressure a scroll pump may be backed by a primary or roughing pump. However as described in the embodiments the KERS is essentially closed and there is little gas flow from the first vacuum enclosure through the scroll pumping arrangement to the second vacuum enclosure. Therefore, it is sufficient that a second vacuum enclosure is used to provide a backing pressure for the scroll pumping arrangement rather than a primary or roughing pump. The second vacuum enclosure need be evacuated only periodically in order to maintain it at a desired pressure. In this regard, it may be desirable to maintain the pressure in the second vacuum enclosure between about 10 and 100 mbar. Since the system is closed the periodic intervals may be infrequent for example hourly, daily, or weekly, or evacuation may occur when a vehicle is serviced, charged with fuel or electricity, or at specific geographical locations.

The vehicle part which dissipates energy may be the same or a different part to the one that receives energy. The flywheel stores energy by rotation in proportion to its inertia and the square of its rotational speed and may receive energy mechanically from a rotating part of the vehicle or alternatively may be driven by an electrical motor and a generator which converts mechanical energy to electrical energy for driving the motor.

A second vacuum pumping arrangement may be provided and operable for periodically evacuating the second vacuum enclosure to maintain the second vacuum enclosure at a pressure less than atmosphere. A valve arrangement may be provided for resisting upstream fluid flow through the outlet of the second vacuum enclosure and allowing downstream fluid flow.

The second vacuum pumping arrangement may be in fluid communication with the valve arrangement and operable with the valve arrangement for pumping gas from the second vacuum enclosure through the exhaust for maintaining the second vacuum enclosure at a pressure less than atmosphere. In examples of the invention, the second vacuum pumping arrangement may form part of the vehicle, may have a secondary function in the vehicle (for example as part of a braking system) or may be external to and separate from the vehicle.

If the second vacuum pumping arrangement is not included in the vehicle itself, there may be provided a flow line downstream of the valve arrangement which comprises a connector for selective sealed connection with a vacuum line or second vacuum pumping arrangement separate from the vehicle. The valve arrangement may then be operable when connected to cause flow of gas through the exhaust of the second vacuum enclosure for maintaining the second vacuum enclosure at a pressure less than atmosphere. An example of this arrangement may include the provision of a vacuum line or second vacuum pumping arrangement at a gas or petrol station, or charging point, whereby a sealed connection is made for evacuating the second vacuum enclosure coterminous with filling the vehicle with fuel or charging the battery.

A controller may be provided which is configured to control flow of gas from the second vacuum enclosure. The controller may be a processing unit or form part of a vehicle CPU which is connected to the valve arrangement and/or the second vacuum pumping arrangement to emit a signal for initiating enclosure evacuation. The controller may be responsive to an event for initiating evacuation such as the availability of redundant capacity in the second vacuum pumping arrangement or to a sensed pressure in the second vacuum enclosure.

The second vacuum pumping arrangement may comprise a scroll pumping mechanism or a diaphragm pumping mechanism, or an air ejector pumping mechanism. In this last example, a compressed air system of the vehicle may feed air to the air ejector pumping mechanism.

The second vacuum pumping arrangement may be operable to provide a vacuum for use by a separate sub-system of the vehicle for example at a pressure of at least 100 mbar.

Advantageously, the second vacuum enclosure may contain a material, such as a molecular sieve, for absorbing gas exhausted from the first vacuum enclosure.

In another embodiment, in a first condition the scroll pumping arrangement is operable for evacuating the first vacuum enclosure and the second vacuum enclosure provides a backing pressure for the scroll pumping arrangement and in a second condition the scroll pumping arrangement is operable for evacuating the second vacuum enclosure. Therefore, the scroll pumping arrangement provides the vacuum pressure for backing itself.

In one example, a valve arrangement connects for fluid communication the inlet of the scroll pumping arrangement to the outlet of the first vacuum enclosure in the first condition and connects for fluid communication the inlet of the scroll pumping arrangement to the outlet of the second vacuum enclosure in the second condition.

In this way, the valve arrangement connects for fluid communication the exhaust of the scroll pumping arrangement to the inlet of the second vacuum enclosure in the first condition so that the second vacuum enclosure can provide a backing pressure for the scroll pumping arrangement.

The valve arrangement may comprise three valves. In this arrangement, a first valve which when open allows first fluid flow between the inlet of the scroll pumping arrangement and the gas outlet of the first vacuum enclosure in the first condition and resists such first fluid flow in the second condition; a second valve which when open allows second fluid flow between the inlet of the scroll pumping arrangement and the inlet of the second vacuum enclosure in the second condition and resists such second fluid flow in the first condition; and a third valve which when open allows third fluid flow between the exhaust of the scroll pumping arrangement and the inlet of the second vacuum enclosure in the first condition so that the second vacuum enclosure provides a backing pressure for the scroll pumping arrangement and resists such third fluid flow in the second condition.

The valve arrangement may additionally comprise a one-way valve (fourth valve) for resisting upstream fluid flow towards the exhaust of the scroll pumping arrangement in the first condition and allowing downstream fluid flow in the second condition.

A controller may be configured to control the valve arrangement for selecting the first condition or the second condition, for example depending on sensed or determined characteristics of the KERS, such as the pressure in the first or second vacuum enclosures, or the intensity or type of use of the KERS.

In normal use of the KERS the second vacuum enclosure is maintained at a pressure of between 10 and 100 mbar and the first enclosure is maintained at a pressure of between 0.1 and 0.01 mbar.

In a second aspect, the present invention provides a vehicle comprising a kinetic energy recovery system comprising: a flywheel supported for rotation in a first vacuum enclosure for receiving energy from and dissipating energy to one or more parts of a vehicle; a scroll vacuum pumping arrangement having an inlet arranged to be in fluid communication with an outlet of the first vacuum enclosure for evacuating the first vacuum enclosure; a second vacuum enclosure having an inlet in fluid communication with an exhaust of the scroll pumping arrangement and arranged to be maintained at a pressure less than atmosphere for reducing the pressure at the exhaust of the scroll pumping arrangement, the second vacuum enclosure comprising an outlet through which gas can be pumped periodically for maintaining the second vacuum enclosure at a pressure less than atmosphere; and a second vacuum pumping arrangement and a valve arrangement operable for periodic evacuation of the second vacuum enclosure.

In a third aspect, the present invention provides a vehicle and base station combination comprising a kinetic energy recovery system for recovering kinetic energy of the vehicle, the vehicle comprising: a flywheel supported for rotation in a first vacuum enclosure for receiving energy from and dissipating energy to one or more parts of a vehicle; a scroll vacuum pumping arrangement having an inlet arranged to be in fluid communication with an outlet of the first vacuum enclosure for evacuating the first vacuum enclosure; a second vacuum enclosure having an inlet in fluid communication with an exhaust of the scroll pumping arrangement and arranged to be maintained at a pressure less than atmosphere for reducing the pressure at the exhaust of the scroll pumping arrangement, the second vacuum enclosure comprising an outlet through which gas can be pumped periodically for maintaining the second vacuum enclosure at a pressure less than atmosphere; a valve arrangement in fluid communication with the exhaust of the second vacuum pumping arrangement for controlling the flow of gas through the exhaust; a first flow line downstream of the valve arrangement comprising a first connector for selective sealed connection with a vacuum line or second vacuum pumping arrangement separate from the vehicle the valve arrangement being operable when connected to cause flow of gas through the exhaust of the second vacuum enclosure for maintaining the second vacuum enclosure at a pressure less than atmosphere; the base station comprising a second vacuum pumping arrangement and a second flow line in fluid communication with an inlet of the second vacuum pumping arrangement, the second flow line comprising a second connector, the first and second connectors being configured to form a sealed connection so that gas can be exhausted from the second vacuum enclosure through the first and second flow lines when the vehicle is located at the base station.

In a fourth aspect, the present invention provides a vehicle comprising a kinetic energy recovery system comprising: a flywheel supported for rotation in a first vacuum enclosure for receiving energy from and dissipating energy to one or more parts of a vehicle; a scroll vacuum pumping arrangement having an inlet arranged to be in fluid communication with an outlet of the first vacuum enclosure for evacuating the first vacuum enclosure; a second vacuum enclosure having an inlet in fluid communication with an exhaust of the scroll pumping arrangement and arranged to be maintained at a pressure less than atmosphere for reducing the pressure at the exhaust of the scroll pumping arrangement, the second vacuum enclosure comprising an outlet through which gas can be pumped periodically for maintaining the second vacuum enclosure at a pressure less than atmosphere; wherein in a first condition the scroll pumping arrangement is operable for evacuating the first vacuum enclosure and the second vacuum enclosure provides a backing pressure for the scroll pumping arrangement and in a second condition the scroll pumping arrangement is operable for evacuating the second vacuum enclosure.

In a fifth aspect, the present invention provides a method of operating a kinetic energy recovery system, the system comprising: a flywheel supported for rotation in a first vacuum enclosure for receiving energy from and dissipating energy to one or more parts of a vehicle; a scroll vacuum pumping arrangement having an inlet arranged to be in fluid communication with an outlet of the first vacuum enclosure for evacuating the first vacuum enclosure; a second vacuum enclosure having an inlet in fluid communication with an exhaust of the scroll pumping arrangement and arranged to be maintained at a pressure less than atmosphere for reducing the pressure at the exhaust of the scroll pumping arrangement, the second vacuum enclosure comprising an outlet through which gas can be pumped periodically for maintaining the second vacuum enclosure at a pressure less than atmosphere, wherein the method comprises periodically evacuating the second vacuum enclosure to a pressure less than atmosphere using either a second vacuum pumping arrangement or the scroll pumping arrangement. The method may comprise periodically evacuating the second enclosure to a pressure between 10 and 100 mbar and evacuating the first enclosure to a pressure between 0.1 and 0.01 mbar.

The present invention finds use in any kinetic energy recovery and/or storage systems in addition to that described for vehicles, for example as a kinetic energy storage system for uninterrupted power supply unit.

Preferred or optional aspects of the invention are defined in the accompanying claims.

In order that the present invention may be well understood, some embodiments thereof, which are given by way of example only, will now be described with reference to the accompanying drawing, in which:
Figure 1 is a schematic representation of a vehicle comprising a recovery system;
Figure 2 is a schematic representation of a vehicle and base station combination comprising a recovery system;
Figure 3 is a schematic representation of a vehicle comprising another recovery system; and
Figure 4 shows the vehicle in Figure 3 in a second condition of the recovery system.

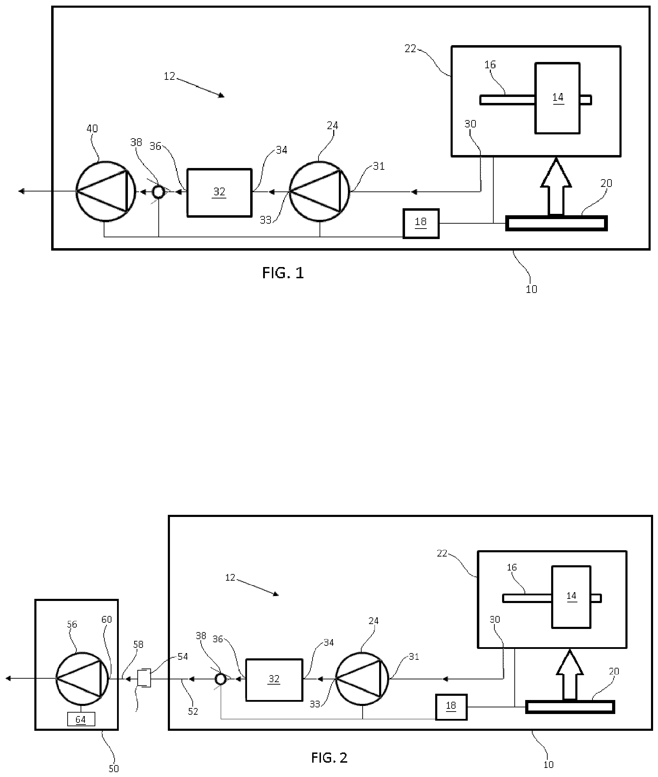

Referring to Figure 1, a vehicle 10 is shown schematically, which may be an automotive land vehicle, or other type of vehicle in which it is of benefit to capture kinetic energy of the vehicle and selectively release it for improving the performance of the vehicle or conserving energy. Recovery systems of this type are particularly prevalent in racing cars, although they have increasing applicability to energy conservation generally, for example public transportation buses.

Whilst not shown the vehicle typically comprises a plurality of wheels, an engine or power source for driving rotation of the wheels for increasing the vehicles speed, a vehicle drive shaft for transmitting energy from the engine to the wheels and a braking arrangement for reducing rotation of the wheels for decreasing propulsion. Some of these elements may be replaced in other types of vehicle, such as air or water borne vehicles.

The vehicle 10 comprises a kinetic energy recovery system (KERS) 12 having a flywheel 14 supported for rotation by a flywheel shaft 16. The flywheel is arranged to receive energy from a part of the vehicle, such as a drive shaft 20 or other internally moving or rotating part, driven by a vehicle motor, engine or battery and dissipate energy to one or more parts of the vehicle, whether that is the same part or a different part or subsystem of the vehicle.

The recovery system may receive mechanical energy from a rotating or other internally moving part of the vehicle by mechanical connection with that part. Alternatively or additionally, the energy received by the recovery system may be received by an electrical connection. In this latter regard, a part of the vehicle which has kinetic energy may transfer its energy to electrical energy, for example by an alternator, and that electrical energy drives a motor of the flywheel. The arrangement of Figure 1 applies equally to mechanical or electrical transfer of energy to or from the recovery system.

Referring again to Figure 1, the recovery system 12 is selectively connected or disconnected from the vehicle part 20, dependent on whether the flywheel is imparting or receiving mechanical or electrical energy in a connected condition or if the recovery system is isolated from other parts from the vehicle in a disconnected condition.

In Figure 1, the drive shaft 20 is represented schematically as a moving part of the vehicle having kinetic energy for connection with the KERS as shown by the arrow in the drawing. In a mechanical arrangement the flywheel 14 is connected by a gear mechanism for geared rotation of the drive shaft relative to the flywheel. In this regard, the flywheel is typically arranged to rotate faster than the rotating part of the vehicle, for example between about 50,000 and 100,000 rpm compared to the drive shaft which may rotate at about 1000 to 20,000 rpm. A control 18 controls connection between the vehicle part 20 and the KERS 12 according to determined characteristics of the vehicle or system or to input by a user of the system. In this regard, the control may receive input from one or more sensors of the vehicle (not shown) to determine operation of the KERS in any one of the energy receiving condition, energy imparting condition or the disconnected condition. These characteristics include by way of example the relative rotational speed or momentum of the flywheel 14 and the rotating part 20, acceleration of the vehicle, engine air compressor or the state of other subsystems of the vehicle. The control 18 may be a specially programmed digital processing unit forming part of a vehicle management system or may be a bespoke unit for controlling activation of the KERS.

In an alternative arrangement, the system may convert mechanical energy to electrical energy, by for example an alternator, for use by an electrical motor for driving rotation of the flywheel. The motor may form part of the KERS and the alternator may be part of a separate sub-system of the vehicle. Mechanical energy from the flywheel may be transferred directly to a moving or rotating part of the vehicle or may first be converted to electrical energy for transfer to the moving or rotating part or for use by an electrical component for example by an electric motor in a hybrid vehicle.

In a further alternative arrangement, the KERS comprises an electrical motor and generator arrangement which in combination can receive either electrical or mechanical energy for transmission to the flywheel or dissipate mechanical or electrical energy from the flywheel. In this alternative arrangement, the connection to the flywheel is electrical and therefore the vacuum enclosure can be substantially sealed reducing leakage of gas from the enclosure.

Referring in more detail to Figure 1, in KERS 12 the flywheel 14 is supported for rotation on shaft 16 in a first vacuum enclosure 22 for receiving energy from and dissipating energy to one or more parts of the vehicle 10. The first vacuum enclosure is sealed and is a generally closed system. There is some leakage of gas into the enclosure but mainly the pressure in the enclosure increases due to outgassing from components within the enclosure such as those made from carbon fibre. Therefore once the enclosure is evacuated to a desired pressure of for example 0.01 mbar the pressure increases slowly.

A scroll vacuum pumping arrangement 24 exhausts the gas that accumulates slowly in the first vacuum enclosure through a gas outlet 30. The scroll vacuum pumping arrangement comprises one or more scroll vacuum pumps located in this example external to the vacuum enclosure. Scroll pumping mechanisms per se are known in the vacuum pumping art and need not be described in detail. The scroll mechanism comprises two intermeshing scrolls which orbit relative to each other to trap pockets of gas at an outer inlet which is compressed as orbiting motion causes movement towards an inner outlet. Compression is gradual and avoids sudden changes in pressure. Also, the motion is orbiting without abrupt changes in movement, unlike for example reciprocating pumps. For these reasons and others, scroll pumping mechanisms are energy efficient, quiet and suitable for evacuating the first vacuum enclosure.

The scroll pump has an inlet 31 in fluid communication with the outlet 30 of the first vacuum enclosure for evacuating the first vacuum enclosure and an exhaust 33 in fluid communication with an inlet 34 of a second enclosure 32 for exhausting gas into the enclosure. Since the amount of gas required to be evacuated is small, a second vacuum enclosure, rather than a backing pump, can provide a sufficient backing pressure for the scroll pump. In systems where there is continuous substantial flow of gas to be evacuated a backing pump is required and is operated during operation of a secondary pump. In such systems if a vacuum enclosure were provided to provide a backing pressure it would quickly increase in pressure. In the present arrangement, a vacuum enclosure can provide the necessary backing pressure if it is evacuated periodically. Therefore, the second vacuum enclosure comprises an outlet 36 through which gas can be pumped periodically for maintaining the second vacuum enclosure at a pressure less than atmosphere. In one example, the second vacuum enclosure contains an absorbent material, such as a molecular sieve, for absorbing gas or water vapour exhausted from the first vacuum enclosure, which may extend the periods between evacuation.

Further, as the flow or quantity of gas being pumped is low, the second vacuum enclosure can be evacuated relatively infrequently by a second vacuum pumping arrangement (discussed in more detail below), which may be an existing part of a vehicle or even located away from the vehicle. The periodical requirement for evacuation depends on factors such as the amount that the KERS is used, the type of use, and other characteristics of the system.

A scroll pump which can generate a pressure at its inlet of about 1 mbar if it exhausts to atmosphere can produce a pressure lower than 1 mbar if it exhausts to a pressure lower than atmosphere. In the present arrangement, in normal use of the KERS the second vacuum enclosure is maintained at a pressure of between 10 and 100 mbar and consequently the first enclosure 22 can be maintained at a pressure of between 0.1 and 0.01 mbar. The pressure of the second vacuum enclosure will change during use, gradually increasing between each evacuation, but at a pressure of around 50 mbar the scroll pump can efficiently evacuate the first vacuum enclosure to about 0.01 mbar.

A valve arrangement 38 is in fluid communication with the exhaust 36 of the second vacuum enclosure 32 for controlling the flow of gas through the exhaust. In one arrangement, the valve is actuated by the controller 18 to open or close, or partially open. The valve is opened when evacuation of vacuum enclosure 32 is required and closed when a desired pressure has been attained. In another example, the valve arrangement is a one way valve for resisting the flow of gas upstream towards the exhaust. In this example flow through the valve is allowed only when pressure downstream of the valve is lower than pressure upstream of the valve.

A second vacuum pumping arrangement 40 is in fluid communication with the valve arrangement 38 and therefore the second vacuum enclosure 32 through the valve arrangement. The second vacuum pumping arrangement is operable with the valve arrangement for pumping gas from the second vacuum enclosure through the exhaust 36 for maintaining the second vacuum enclosure at the desired pressure.

The second vacuum pumping arrangement 40 may have a one or more further functions in the vehicle for generating a vacuum pressure in a vehicle part or parts 42. If in this example the second vacuum pumping arrangement is not used constantly for the further function it has redundant capacity which can be used to evacuate the second vacuum enclosure 32. If the controller 18 may be arranged to receive a signal from the second vacuum pumping arrangement 40 when such redundant capacity is available and to operate the valve arrangement 38 for evacuating the second vacuum enclosure 32.

In examples, the second vacuum pumping arrangement 40 comprises another scroll pumping mechanism (possibly of a turbo or super charging mechanism) or a diaphragm pumping mechanism. In another example, the second vacuum pumping arrangement comprises an air ejector pumping mechanism. A compressed air system of the vehicle feeds air to the air ejector pumping mechanism.

In another example of the invention shown in Figure 2, the second vacuum pumping arrangement is remote from the vehicle 10 and located at a base station 50.

The KERS 12 in Figure 2 comprises a flow line, or gas conduit, 52 downstream of the valve arrangement 38. The flow line is provided at an end portion with a connector 54 for selective sealed connection with a vacuum line or second vacuum pumping arrangement 56 separate from the vehicle and in or at the base station 50. The valve arrangement 38 is operable (e.g. by controller 18) when connected to cause flow of gas through the exhaust 36 of the second vacuum enclosure 32 for maintaining the second vacuum enclosure at the desired pressure.

The base station 50 comprises a second flow line, or gas conduit, 58 in fluid communication with an inlet 60 of the second vacuum pumping arrangement 56. The second flow line comprises a second connector 62. As shown schematically the first and second connectors 54, 62 are configured to form a sealed connection so that gas can be exhausted from the second vacuum enclosure 32 through the first and second flow lines 52, 58 when the vehicle 10 is located at the base station 50. In this example, the first connector may comprise a female connecting part which engages with a male connecting part of the second connector. The connecting parts may comprise a sealing mechanism such as an O-ring seated in an annular channel for forming an airtight connection. The connectors may form a push or screw fit connection with complementary engaging formations.

A controller 64 is provided in this example to control activation of the second vacuum pumping arrangement 56 responsive to a connection between the connectors 54, 62.

The base station 50 is typically at a fixed location and evacuation occurs when the vehicle is located at the base station. Therefore there is no requirement for the vehicle to carry a second vacuum pumping arrangement during normal use. The base station may be for example a gas or petrol station, bus depot, garage, or pit-lane. In some arrangements, the base station may comprise a plurality of flow lines 58 and connectors 62 for evacuating a respective plurality of second vacuum enclosure is 32 at the same time. There may be provided more than one second vacuum pumping arrangement 56 at the base station or a single second vacuum pumping arrangement having a multiplicity of flow lines extending therefrom. The base station may itself include a vacuum enclosure evacuated by a vacuum pump for connection to the vehicle for evacuating the second vacuum enclosure 32.

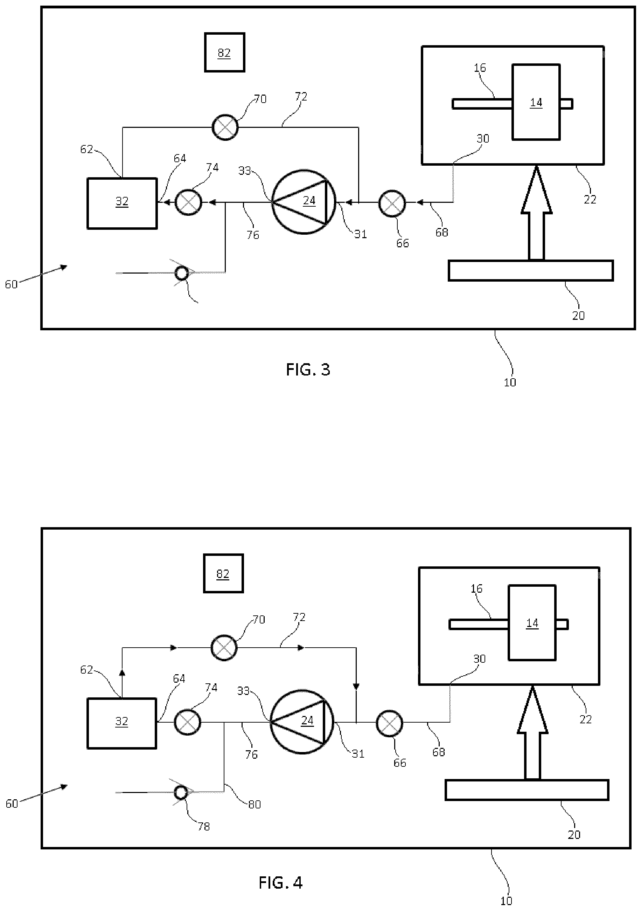

Another embodiment is shown in Figures 3 and 4, in which similar features discussed above in relation to Figures 1 and 2 are given like reference numerals.

The third embodiment has two conditions. In a first condition of the KERS 60 shown in Figure 3 the scroll pumping arrangement 24 is operable for evacuating the first vacuum enclosure 22 and the second vacuum enclosure 32 provides a backing pressure for the scroll pumping arrangement. In a second condition of the KERS 60 shown in Figure 4 the scroll pumping arrangement 24 is operable for evacuating the second vacuum enclosure 32. In this way, the scroll pump 24 provides backing or roughing pressure for itself. A valve arrangement connects for fluid communication the inlet 31 of the scroll pump 24 to the outlet 30 of the first vacuum enclosure 22 in the first condition in Figure 3. In the second condition in Figure 4 the valve arrangement connects for fluid communication the inlet 31 of the scroll pump to an outlet 62 of the second vacuum enclosure 32. The valve arrangement connects for fluid communication the exhaust 33 of the scroll pump 24 to the inlet 64 of the second vacuum enclosure in the first condition so that the second vacuum enclosure can provide a backing pressure for the scroll pump.

The valve arrangement in the illustrated example comprises four valves.

A first valve 66 is located in a flow line, or gas conduit, 68 between the inlet 31 of the scroll pump and the gas outlet 30 of the first vacuum enclosure. When the valve is open fluid flow is caused by operation of the scroll pump between the inlet of the scroll pumping arrangement and the gas outlet of the first vacuum enclosure in the first condition. When the valve is closed it resists this fluid flow in the second condition.

A second valve 70 is located in a flow line, or gas conduit, 72 between the inlet 31 of the scroll pump and the outlet 62 of the second vacuum enclosure. When the valve is open it allows fluid flow between the inlet of the scroll pumping arrangement and the inlet of the second vacuum enclosure in the second condition. The valve resists this fluid flow in the first condition.

A third valve 74 is located in a flow line, or gas conduit, 76 between the exhaust 33 of the scroll pump 24 and the inlet 64 of the second vacuum enclosure. When this valve is open it allows fluid flow between the exhaust of the scroll pumping arrangement and the inlet of the second vacuum enclosure in the first condition so that the second vacuum enclosure provides a backing pressure for the scroll pumping arrangement. The valve resists this fluid flow in the second condition.

A fourth valve 78 is located in a flow line, or gas conduit, 80 between the exhaust of the scroll pump 24 and an outlet of the KERS to atmosphere. The fourth valve is preferably a one-way valve as illustrated for resisting upstream fluid flow towards the exhaust of the scroll pumping arrangement in the first condition and allowing downstream fluid flow in the second condition.

A controller 82 is connected by control lines (not shown) to the valve arrangement and may also be connected to enclosures 22, 32, scroll pump 24 and second pump 32, and the vehicle part 20. The controller for part of a CPU of a vehicle or be a bespoke processing component. It is configured to control the valve arrangement for selecting the first condition or the second condition. Such control may be responsive for example to a determination of pressure in the enclosures 22, 32 or operation of the KERS and vehicle part.

In the first condition of KERS 60 shown in Figure 3 the scroll pump 24 is operated for evacuating enclosure 22 and is provided with a backing pressure by enclosure 32 to improve the ultimate pressure of the scroll pump and/or improve energy efficiency. In Figure 3, valve 70 is closed and valves 66, 74 are open. Scroll pump 24 is operated to evacuate gas from enclosure 22 through its outlet 30 along flow line 68 to the inlet 31 of the scroll pump and from the exhaust. Gas is not evacuated to atmosphere through valve 78, which remains closed, since the enclosure is at lower pressure than atmosphere. The second enclosure gradually fills with gas as outgases and leakage is evacuated from enclosure 22 and conveyed downstream. Dependent on the specific structure or intensity of use, the second vacuum enclosure may exceed a desired pressure (e.g. 100 mbar) after a period of time such as a minute, an hour, a day. Preferably it is determined for example by a sensor when the pressure in the vacuum enclosure exceeds a predetermined pressure and the controller 82 is responsive to the determination to control the valve arrangement to operate in the second condition.

The second condition is illustrated in Figure 4. The valve 70 is open and valves 66, 74 are closed. The scroll pump 24 is operated to evacuate gas from enclosure 32 through outlet 62 along flow line 72 to the inlet 31 of the scroll pump. Since valve 74 is closed gas is directed from exhaust 33 along flow line 80 out of the KERS. When the pressure in enclosure 32 is reduced to a predetermined pressure (e.g. 10 mbar) the controller changes operation to the first condition. The time taken to reduce the pressure depends on such things as the volume of the pressure vessel 32, the capacity and compression generated by the scroll pump 24 and the conductance of the flow lines. If the second enclosure contains a desiccant for absorbing gas, it is desirable to replace it when it is saturated or mostly saturated and replacement may occur for example during vehicle servicing.

### Key to Figures

- 10.: Vehicle (bus, racing car etc.)
- 12.: Kinetic Energy Recovery System (KERS)
- 14.: Flywheel
- 16.: Flywheel Shaft
- 18.: Controller
- 20.: Rotating Vehicle Part (Drive Shaft etc.)
- 22.: First Vacuum Enclosure
- 24.: Scroll Pumping Arrangement
- 30.: Outlet
- 32.: Second Vacuum Enclosure
- 34.: Second Vacuum Enclosure Inlet
- 36.: Second Vacuum Enclosure Exhaust
- 38.: Valve Arrangement
- 40.: Second Vacuum Pumping Arrangement
- 42.: Vehicle Part(s)
- 50.: Base Station
- 52.: Flow Line/conduit
- 54.: Connector
- 56.: Second Pumping Arrangement/Vacuum line
- 58.: Flow Line/conduit
- 60.: Inlet
- 62.: Second Connector
- 64.: Controller
- 66.: Valve
- 70.: Valve
- 72.: Conduit
- 74.: Valve
- 76.: Conduit
- 78.: Valve
- 80.: Conduit
- 82.: Controller

## Claims

1. A kinetic energy recovery system (12, 60) comprising:
a flywheel (14) supported for rotation in a first vacuum enclosure (22) for receiving energy from and dissipating energy to one or more parts of a vehicle (10);
a vacuum pumping arrangement (24) having an inlet (31) arranged to be in fluid communication with an outlet (30) of the first vacuum enclosure for evacuating the first vacuum enclosure;
a second vacuum enclosure (32) having an inlet (34) in fluid communication with an exhaust (33) of the pumping arrangement and arranged to be maintained at a pressure less than atmosphere for reducing the pressure at the exhaust of the pumping arrangement,
**characterized by**
the vacuum pumping arrangement being a scroll vacuum pumping arrangement; and
the second vacuum enclosure comprising an outlet (36) through which gas can be pumped periodically for maintaining the second vacuum enclosure at a pressure less than atmosphere.

2. A kinetic energy recovery system (12, 60) as claimed in claim 1, comprising a second vacuum pumping arrangement (40) operable for periodically evacuating the second vacuum enclosure (32) to maintain the second vacuum enclosure at a pressure less than atmosphere.

3. A kinetic energy recovery system (12, 60) as claimed in claim 2, comprising a valve arrangement (38) for resisting upstream fluid flow through the outlet (36) of the second vacuum enclosure (32) and allowing downstream fluid flow.

4. A kinetic energy recovery system (12, 60) as claimed in claim 3, wherein the second vacuum pumping arrangement (40) is separate from the vehicle (10) and the system comprises a flow line (51) downstream of the valve arrangement (38) comprising a connector (54) for forming a sealed connection with the second vacuum pumping arrangement so that when connected the second vacuum pumping arrangement is operable to cause flow of gas through the outlet (36) of the second vacuum enclosure for maintaining the second vacuum enclosure at a pressure less than atmosphere.

5. A kinetic energy recovery system (12, 60) as claimed in claim 3, wherein the second vacuum pumping arrangement (40) forms part of the vehicle (10).

6. A kinetic energy recovery system (12, 60) as claimed in claim 5, wherein the second vacuum pumping arrangement (40) comprises a scroll pumping mechanism or a diaphragm pumping mechanism.

7. A kinetic energy recovery system (12, 60) as claimed in claim 5, wherein the second vacuum pumping arrangement (40) comprises an air ejector pumping mechanism and a compressed air system of the vehicle feeds air to the air ejector pumping mechanism.

8. A kinetic energy recovery system (12, 60) as claimed in any of claims 5 to 7, wherein the second vacuum pumping arrangement (40) is operable to provide a vacuum for use by a separate sub-system of the vehicle (10).

9. A kinetic energy recovery system (12, 60) as claimed in any of the preceding claims, comprising a controller (64) configured to control flow of gas from the second vacuum enclosure (32).

10. A kinetic energy recovery system (12, 60) as claimed in claim 1, wherein in a first condition the scroll pumping arrangement (24) is operable for evacuating the first vacuum enclosure (22) and the second vacuum enclosure (32) provides a backing pressure for the scroll pumping arrangement (24) and in a second condition the scroll pumping arrangement (24) is operable for evacuating the second vacuum enclosure (32).

11. A kinetic energy recovery system (12, 60) as claimed in claim 10, comprising a valve arrangement (66, 70, 74) which connects for fluid communication the inlet (31) of the scroll pumping arrangement (24) to the outlet (30) of the first vacuum enclosure (22) in the first condition and which connects for fluid communication the inlet (31) of the scroll pumping arrangement (24) to an outlet (62) of the second vacuum enclosure (32) in the second condition.

12. A kinetic energy recovery system (12, 60) as claimed in claim 11, wherein the valve arrangement (66, 70, 74) connects for fluid communication the exhaust (33) of the scroll pumping arrangement (24) to the inlet (64) of the second vacuum enclosure (32) in the first condition so that the second vacuum enclosure can provide a backing pressure for the scroll pumping arrangement.

13. A kinetic energy recovery system (12, 60) as claimed in claim 12, wherein the valve arrangement comprises:
a first valve (66) which when open allows first fluid flow between the inlet (31) of the scroll pumping arrangement (24) and the gas outlet (30) of the first vacuum enclosure (22) in the first condition and resists such first fluid flow in the second condition;
a second valve (70) which when open allows second fluid flow between the inlet (31) of the scroll pumping arrangement (24) and the inlet (62) of the second vacuum enclosure (32) in the second condition and resists such second fluid flow in the first condition; and
a third valve (74) which when open allows third fluid flow between the exhaust (33) of the scroll pumping arrangement (24) and the inlet (64) of the second vacuum enclosure (32) in the first condition so that the second vacuum enclosure provides a backing pressure for the scroll pumping arrangement and resists such third fluid flow in the second condition.

14. A kinetic energy recovery system (12, 60) as claimed in claim 13, wherein the valve arrangement comprises a one-way valve for resisting upstream fluid flow towards the exhaust of the scroll pumping arrangement in the first condition and allowing downstream fluid flow in the second condition.

15. A kinetic energy recovery system (12, 60) as claimed in any of claims 10 to 14, comprising a controller (82) configured to control the valve arrangement for selecting the first condition or the second condition.

16. A kinetic energy recovery system (12, 60) as claimed in any of the preceding claims, wherein the second vacuum enclosure (32) contains a material for absorbing gas exhausted from the first vacuum enclosure.

17. A kinetic energy recovery system (12, 60) as claimed in any of the preceding claims, wherein in normal use the second vacuum enclosure (32) is maintained at a pressure of between 10 and 100 mbar and the first enclosure (22) is maintained at a pressure of between 0.1 and 0.01 mbar.

18. A vehicle (10) comprising a kinetic energy recovery system (12, 60) according to Claim 1, further comprising:
a second vacuum pumping arrangement (56) and a valve arrangement operable for periodic evacuation of the second vacuum enclosure (32).

19. A vehicle (10) and base station (50) combination comprising a kinetic energy recovery system (12, 60) according to Claim 1, for recovering kinetic energy of the vehicle, further comprising:-
a valve arrangement (38) in fluid communication with the exhaust of the second vacuum enclosure for controlling the flow of gas through the exhaust;
a first flow line downstream (52) of the valve arrangement (38) comprising a first connector (54) for selective sealed connection with a vacuum line (58) or second vacuum pumping arrangement (56) separate from the vehicle (10) the valve arrangement being operable when connected to cause flow of gas through the exhaust (36) of the second vacuum enclosure (32) for maintaining the second vacuum enclosure at a pressure less than atmosphere;
the base station (50) comprising a second vacuum pumping arrangement (56) and a second flow line (58) in fluid communication with an inlet (60) of the second vacuum pumping arrangement, the second flow line comprising a second connector (62), the first and second connectors being configured to form a sealed connection so that gas can be exhausted from the second vacuum enclosure through the first and second flow lines when the vehicle is located at the base station.

20. A vehicle (10) comprising a kinetic energy recovery system (12, 60) according to Claim 1, wherein in a first condition the scroll pumping arrangement (24) is operable for evacuating the first vacuum enclosure (22) and the second vacuum enclosure (32) provides a backing pressure for the scroll pumping arrangement and in a second condition the scroll pumping arrangement is operable for evacuating the second vacuum enclosure.

21. A method of operating a kinetic energy recovery system (12, 60), the system comprising:
a flywheel (14) supported for rotation in a first vacuum enclosure (22) for receiving energy from and dissipating energy to one or more parts of a vehicle (10);
a scroll vacuum pumping arrangement (24) having an inlet (31) arranged to be in fluid communication with an outlet (30) of the first vacuum enclosure (22) for evacuating the first vacuum enclosure;
a second vacuum enclosure (32) having an inlet (34) in fluid communication with an exhaust (33) of the scroll pumping arrangement (24) and arranged to be maintained at a pressure less than atmosphere for reducing the pressure at the exhaust of the scroll pumping arrangement, the second vacuum enclosure comprising an outlet (36) through which gas can be pumped periodically for maintaining the second vacuum enclosure at a pressure less than atmosphere
wherein the method comprises periodically evacuating the second vacuum enclosure to a pressure less than atmosphere using either a second vacuum pumping arrangement (56) or the scroll pumping arrangement.

22. A method as claimed in claim 21, comprising periodically evacuating the second enclosure (32) to a pressure between 10 and 100 mbar and evacuating the first enclosure to a pressure between 0.1 and 0.01 mbar.

## Patentansprüche

1. Rückgewinnungssystem (12, 60) für kinetische Energie, mit:
einem Schwungrad (14), das in einem ersten Vakuumgehäuse (22) drehbar abgestützt ist, um von einem oder mehreren Teilen eines Fahrzeugs (10) Energie aufzunehmen und Energie abzuführen,
einer Vakuumpumpenanordnung (24) mit einem Einlass (31) in Strömungsverbindung mit einem Auslass (30) des ersten Vakuumgehäuses zum Evakuieren des ersten Vakuumgehäuses;
einem zweiten Vakuumgehäuse (32) mit einem Einlass (34) in Strömungsverbindung mit einem Auslass (33) der Pumpenanordnung und angeordnet zum Halten auf einem Druck niedriger als Atmosphärendruck zum Reduzieren des Drucks am Auslass der Pumpenanordnung,
**dadurch gekennzeichnet, dass** die Vakuumpumpenanordnung eine Scroll-Vakuumpumpenanordnung ist; und
das zweite Vakuumgehäuse einen Auslass (36) aufweist, durch welchen Gas periodisch gepumpt werden kann, um das zweite Vakuumgehäuse auf einen Druck unterhalb Atmosphärendruck zu halten.

2. Rückgewinnungssystem (12, 60) für kinetische Energie nach Anspruch 1, mit einer zweiten Vakuumpumpenanordnung (40), die zum periodischen Evakuieren des zweiten Vakuumgehäuses (32) betreibbar ist, um das zweite Vakuumgehäuse auf einem Druck unterhalb Atmosphärendruck zu halten.

3. Rückgewinnungssystem (12, 60) für kinetische Energie nach Anspruch 2, mit einer Ventilanordnung (38) zum Sperren einer stromaufwärts-Fluidströmung durch den Auslass (36) des zweiten Vakuumgehäuses (32) und zum Zulassen einer stromabwärts-Fluidströmung.

4. Rückgewinnungssystem (12, 60) für kinetische Energie nach Anspruch 3, wobei die zweite Vakuumpumpenanordnung (40) vom Fahrzeug (10) getrennt ist und das System eine Strömungsleitung (51) stromab der Ventilanordnung (38) mit einem Verbinder (54) zum Herstellen einer abgedichteten Verbindung mit der zweiten Vakuumpumpenanordnung aufweist, so dass, wenn angeschlossen, die zweite Vakuumpumpen-anordnung betreibbar ist, um eine Gasströmung durch den Auslass (36) des zweiten Vakuumgehäuses zum Halten des zweiten Vakuumgehäuses auf einem Druck niedriger als Atmosphärendruck zu bewirken.

5. Rückgewinnungssystem (12, 60) für kinetische Energie nach Anspruch 3, wobei die zweite Vakuumpumpenanordnung (40) einen Teil des Fahrzeugs (10) bildet.

6. Rückgewinnungssystem (12, 60) für kinetische Energie nach Anspruch 5, wobei die zweite Vakuumpumpenanordnung (40) einen Scroll-Pumpenmechanismus oder einen Membranpumpenmechanismus aufweist.

7. Rückgewinnungssystem (12, 60) für kinetische Energie nach Anspruch 5, wobei die zweite Vakuumpumpenanordnung (40) einen Luft-Ejektor-Pumpenmechanismus aufweist und ein Druckluftsystem des Fahrzeugs Luft zum Luft-Ejektor-Pumpenmechanismus zuführt.

8. Rückgewinnungssystem (12, 60) für kinetische Energie nach einem der Ansprüche 5 bis 7, wobei die zweite Vakuumpumpenanordnung (40) betreibbar ist, um ein Vakuum zur Verwendung durch ein separates Untersystem des Fahrzeugs (10) bereitzustellen.

9. Rückgewinnungssystem (12, 60) für kinetische Energie nach einem der vorhergehenden Ansprüche, mit einem Regler (64), der dafür konfiguriert ist, eine Gasströmung aus dem zweiten Vakuumgehäuse (32) zu steuern.

10. Rückgewinnungssystem (12, 60) für kinetische Energie nach Anspruch 1, wobei in einem ersten Zustand die Scroll-Pumpenanordnung (24) zum Evakuieren des ersten Vakuumgehäuses (22) betreibbar ist und das zweite Vakuumgehäuse (32) einen Vordruck für die Scroll-Pumpenanordnung (24) bereitstellt, und in einem zweiten Zustand die Scroll-Pumpenanordnung (24) zum Evakuieren des zweiten Vakuumgehäuses (32) betreibbar ist.

11. Rückgewinnungssystem (12, 60) für kinetische Energie nach Anspruch 10, mit einer Ventilanordnung (66, 70, 74), welche den Einlass (31) der Scroll-Pumpenanordnung (24) zur Strömungsverbindung mit dem Auslass (30) des ersten Vakuumgehäuses (22) im ersten Zustand verbindet, und welche den Einlass (31) der Scroll-Pumpenanordnung (24) zur Strömungsverbindung mit einem Auslass (62) des zweiten Vakuumgehäuses (32) in dem zweiten Zustand verbindet.

12. Rückgewinnungssystem (12, 60) für kinetische Energie nach Anspruch 11, wobei die Ventilanordnung (66, 70, 74) den Auslass (33) der Scroll-Pumpenanordnung (24) zur Strömungsverbindung mit dem Einlass (64) des zweiten Vakuumgehäuses (32) in den ersten Zustand verbindet, so dass das zweite Vakuumgehäuse einen Vordruck für die Scroll-Pumpenanordnung bereitstellen kann.

13. Rückgewinnungssystem (12, 60) für kinetische Energie nach Anspruch 12, wobei die Ventilanordnung aufweist:
ein erstes Ventil (66), das, wenn es geöffnet ist, eine erste Fluidströmung zwischen dem Einlass (31) der Scroll-Pumpenanordnung (24) und dem Gasauslass (30) des ersten Vakuumgehäuses (22) in dem ersten Zustand ermöglicht und eine solche erste Fluidströmung in dem zweiten Zustand sperrt;
ein zweites Ventil (70), das, wenn es geöffnet ist, eine zweite Fluidströmung zwischen dem Einlass (31) der Scroll-Pumpenanordnung (24) und dem Einlass (62) des zweiten Vakuumgehäuses (32) in dem zweiten Zustand ermöglicht und eine solche zweite Fluidströmung in dem ersten Zustand sperrt; und
ein drittes Ventil (74), das, wenn es geöffnet ist, eine dritte Fluidströmung zwischen dem Auslass (33) der Scroll-Pumpenanordnung (24) und dem Einlass (64) des zweiten Vakuumgehäuses (32) in dem ersten Zustand zulässt, so dass das zweite Vakuumgehäuse einen Vordruck für die Scroll-Pumpenanordnung bereitstellt, und in dem zweiten Zustand eine solche dritte Fluidströmung sperrt.

14. Rückgewinnungssystem (12, 60) für kinetische Energie nach Anspruch 13, wobei die Ventilanordnung ein Einwegventil zum Sperren einer stromaufwärts-Fluidströmung zum Auslass der Scroll-Pumpenanordnung in dem ersten Zustand und zum Zulassen einer stromabwärts-Fluidströmung in dem zweiten Zustand aufweist.

15. Rückgewinnungssystem (12, 60) für kinetische Energie nach einem der Ansprüche 10 bis 14 nach einem Regler (82), der zur Steuerung der Ventilanordnung zur Wahl des ersten Zustand oder des zweiten Zustands konfiguriert ist.

16. Rückgewinnungssystem (12, 60) für kinetische Energie nach einem der vorhergehenden Ansprüche, wobei das zweite Vakuumgehäuse (32) ein Material zum Absorbieren von aus dem ersten Vakuumgehäuse ausgeströmtes Gas enthält.

17. Rückgewinnungssystem (12, 60) für kinetische Energie nach einem der vorhergehenden Ansprüche, wobei im normalen Betrieb das zweite Vakuumgehäuse (32) auf einem Druck zwischen 10 und 100 mbar und das erste Gehäuse (22) auf einem Druck zwischen 01, und 0,01 mbar gehalten wird.

18. Fahrzeug (10) mit einem Rückgewinnungssystem (12, 60) für kinetische Energie nach Anspruch 1, das weiter aufweist:
Eine zweite Vakuumpumpenanordnung (56) und eine Ventilanordnung, die zum periodischen Evakuieren des zweiten Vakuumgehäuses (32) betreibbar ist.

19. Kombination aus einem Fahrzeug (10) und einer Basisstation (50) mit einem Rückgewinnungssystem (12, 60) für kinetische Energie nach Anspruch 1 zum Rückgewinnen kinetischer Energie des Fahrzeugs, die weiter aufweist:
eine Ventilanordnung (38) in Strömungsverbindung mit dem Auslass des zweiten Vakuumgehäuses zur Steuerung der Gasströmung durch den Auslass;
eine erste Strömungsleitung stromab (52) der Ventilanordnung (38) mit einem ersten Verbinder (54) zur wahlweisen abgedichteten Verbindung mit einer Vakuumleitung (58) oder zweiten Vakuumpumpenanordnung (56) getrennt von dem Fahrzeug (10), wobei die Ventilanordnung in verbundenem Zustand zum Bewirken einer Gasströmung durch den Auslass (36) des zweiten Vakuumgehäuses (32) betreibbar ist, um das zweite Vakuumgehäuse auf einem Druck unterhalb des Atmosphärendrucks zu halten;
wobei die Basisstation (50) eine zweite Vakuumpumpenanordnung (56) und eine zweite Strömungsleitung (58) in Strömungsverbindung mit einem Einlass (60) der zweiten Vakuumpumpenanordnung aufweist, die zweite Strömungsleitung einen zweiten Verbinder (62) aufweist, der erste und der zweite Verbinder dafür konfiguriert sind, eine abgedichtete Verbindung herzustellen, so dass Gas aus dem zweiten Vakuumgehäuse durch die erste und die zweite Strömungsleitung abströmen kann, wenn das Fahrzeug sich an der Basisstation befindet.

20. Fahrzeug (10) mit einem Rückgewinnungssystem (12, 60) für kinetische Energie nach Anspruch 1, wobei in einem ersten Zustand die Scroll-Pumpenanordnung (24) zum Evakuieren des ersten Vakuumgehäuses (22) betreibbar ist und das zweite Vakuumgehäuse (32) einen Vordruck für die Scroll-Pumpenanordnung bereitstellt, und in einem zweiten Zustand die Scroll-Pumpenanordnung zum Evakuieren des zweiten Vakuumgehäuses betreibbar ist.

21. Verfahren zum Betreiben eines Rückgewinnungssystems (12, 60) für kinetische Energie, wobei das System aufweist:
ein Schwungrad (14), das in einem ersten Vakuumgehäuse (22) drehbar abgestützt ist, zum Aufnehmen von Energie und Abführen von Energie von einem oder mehreren Teilen eines Fahrzeugs (10);
eine Scroll-Vakuumpumpenanordnung (24) mit einem Einlass (31), der in Strömungsverbindung mit einem Auslass (31) des ersten Vakuumgehäuses (22) steht, zum Evakuieren des ersten Vakuumgehäuses,
ein zweites Vakuumgehäuse (32) mit einem Einlass (34) in Strömungsverbindung mit einem Auslass (33) der Scroll-Pumpenanordnung (24), das so angeordnet ist, dass es auf einem Druck unterhalb Atmosphärendruck gehalten wird, um den Druck am Auslass der Scroll-Pumpenanordnung zu reduzieren, wobei das zweite Vakuumgehäuse einen Auslass (36) aufweist, durch welchen Gas periodisch gepumpt werden kann, um das zweite Vakuumgehäuse auf einem Druck niedriger als Atmosphärendruck zu halten,
wobei das Verfahren das periodische Evakuieren des zweiten Vakuumgehäuses auf einen Druck unterhalb Atmosphärendruck unter Verwendung entweder einer zweiten Vakuumpumpenanordnung (56) oder der Scroll-Pumpenanordnung umfasst.

22. Verfahren nach Anspruch 21, welches das periodische Evakuieren des zweiten Gehäuses (32) auf einen Druck zwischen 10 und 100 mbar und das Evakuieren des ersten Gehäuses auf einem Druck zwischen 0,1 und 0,01 mbar umfasst.

## Revendications

1. Système de récupération d'énergie cinétique (12, 60) comprenant :
un volant d'inertie (14) supporté pour une rotation dans une première enceinte sous vide (22) pour recevoir de l'énergie en provenance d'une ou de plusieurs pièces d'un véhicule (10) et dissiper de l'énergie vers celles-ci ;
un agencement de pompage par le vide (24) ayant un orifice d'admission (31) agencé pour être en communication fluidique avec un orifice de refoulement (30) de la première enceinte sous vide pour évacuer la première enceinte sous vide ;
une seconde enceinte sous vide (32) ayant un orifice d'admission (34) en communication fluidique avec un échappement (33) de l'agencement de pompage et agencée pour être maintenue à une pression inférieure à la pression atmosphérique pour réduire la pression au niveau de l'échappement de l'agencement de pompage,
**caractérisé en ce que**
l'agencement de pompage par le vide est un agencement de pompage par le vide à volute ; et
la seconde enceinte sous vide comprenant un orifice de refoulement (36) à travers lequel du gaz peut être pompé périodiquement pour maintenir la seconde enceinte sous vide à une pression inférieure à la pression atmosphérique.

2. Système de récupération d'énergie cinétique (12, 60) selon la revendication 1, comprenant un second agencement de pompage par le vide (40) opérationnel pour évacuer périodiquement la seconde enceinte sous vide (32) pour maintenir la seconde enceinte sous vide à une pression inférieure à la pression atmosphérique.

3. Système de récupération d'énergie cinétique (12, 60) selon la revendication 2, comprenant un agencement de soupapes (38) pour résister à un écoulement de fluide en amont à travers l'orifice de refoulement (36) de la seconde enceinte sous vide (32) et permettre un écoulement de fluide en aval.

4. Système de récupération d'énergie cinétique (12, 60) selon la revendication 3, dans lequel le second agencement de pompage par le vide (40) est séparé du véhicule (10) et le système comprend une conduite d'écoulement (51) en aval de l'agencement de soupapes (38) comprenant un raccord (54) pour former un raccordement étanche avec le second agencement de pompage par le vide de sorte que, lorsqu'il est raccordé, le second agencement de pompage par le vide est opérationnel pour provoquer un écoulement de gaz à travers l'orifice de refoulement (36) de la seconde enceinte sous vide pour maintenir la seconde enceinte sous vide à une pression inférieure à la pression atmosphérique.

5. Système de récupération d'énergie cinétique (12, 60) selon la revendication 3, dans lequel le second agencement de pompage par le vide (40) fait partie du véhicule (10).

6. Système de récupération d'énergie cinétique (12, 60) selon la revendication 5, dans lequel le second agencement de pompage par le vide (40) comprend un mécanisme de pompage à volute ou un mécanisme de pompage à membrane.

7. Système de récupération d'énergie cinétique (12, 60) selon la revendication 5, dans lequel le second agencement de pompage par le vide (40) comprend un mécanisme de pompage à éjecteur d'air et un système d'air comprimé du véhicule alimente en air le mécanisme de pompage à éjecteur d'air.

8. Système de récupération d'énergie cinétique (12, 60) selon l'une quelconque des revendications 5 à 7, dans lequel le second agencement de pompage par le vide (40) est opérationnel pour fournir du vide pour qu'il soit utilisé par un sous-système séparé du véhicule (10).

9. Système de récupération d'énergie cinétique (12, 60) selon l'une quelconque des revendications précédentes, comprenant un dispositif de commande (64) configuré pour commander un écoulement de gaz provenant de la seconde enceinte sous vide (32).

10. Système de récupération d'énergie cinétique (12, 60) selon la revendication 1, dans lequel dans un premier état, l'agencement de pompage à volute (24) est opérationnel pour évacuer la première enceinte sous vide (22) et la seconde enceinte sous vide (32) fournit une pression au refoulement pour l'agencement de pompage à volute (24) et, dans un second état, l'agencement de pompage à volute (24) est opérationnel pour évacuer la seconde enceinte sous vide (32).

11. Système de récupération d'énergie cinétique (12, 60) selon la revendication 10, comprenant un agencement de soupapes (66, 70, 74) qui raccorde pour une communication fluidique l'orifice d'admission (31) de l'agencement de pompage à volute (24) à l'orifice de refoulement (30) de la première enceinte sous vide (22) dans le premier état, et qui raccorde pour une communication fluidique l'orifice d'admission (31) de l'agencement de pompage à volute (24) à un orifice de refoulement (62) de la seconde enceinte sous vide (32) dans le second état.

12. Système de récupération d'énergie cinétique (12, 60) selon la revendication 11, dans lequel l'agencement de soupapes (66, 70, 74) raccorde pour une communication fluidique l'échappement (33) de l'agencement de pompage à volute (24) à l'orifice d'admission (64) de la seconde enceinte sous vide (32) dans le premier état, de sorte que la seconde enceinte sous vide puisse fournir une pression au refoulement pour l'agencement de pompage à volute.

13. Système de récupération d'énergie cinétique (12, 60) selon la revendication 12, dans lequel l'agencement de soupapes comprend :
une première soupape (66) qui, lorsqu'elle est ouverte, permet un premier écoulement de fluide entre l'orifice d'admission (31) de l'agencement de pompage à volute (24) et l'orifice de refoulement de gaz (30) de la première enceinte sous vide (22) dans le premier état et résiste à ce premier écoulement de fluide dans le second état ;
une deuxième soupape (70) qui, lorsqu'elle est ouverte, permet un deuxième écoulement de fluide entre l'orifice d'admission (31) de l'agencement de pompage à volute (24) et l'orifice d'admission (62) de la seconde enceinte sous vide (32) dans le second état et résiste à ce deuxième écoulement de fluide dans le premier état ; et
une troisième soupape (74) qui, lorsqu'elle est ouverte, permet un troisième écoulement de fluide entre l'échappement (33) de l'agencement de pompage à volute (24) et l'orifice d'admission (64) de la seconde enceinte sous vide (32) dans le premier état, de sorte que la seconde enceinte sous vide fournisse une pression au refoulement pour l'agencement de pompage à volute et résiste à ce troisième écoulement de fluide dans le second état.

14. Système de récupération d'énergie cinétique (12, 60) selon la revendication 13, dans lequel l'agencement de soupapes comprend une soupape de non-retour pour résister à un écoulement de fluide en amont vers l'échappement de l'agencement de pompage à volute dans le premier état et permettre un écoulement de fluide en aval dans le second état.

15. Système de récupération d'énergie cinétique (12, 60) selon l'une quelconque des revendications 10 à 14, comprenant un dispositif de commande (82) configuré pour commander l'agencement de soupapes pour sélectionner le premier état ou le second état.

16. Système de récupération d'énergie cinétique (12, 60) selon l'une quelconque des revendications précédentes, dans lequel la seconde enceinte sous vide (32) contient un matériau pour absorber le gaz échappé de la première enceinte sous vide.

17. Système de récupération d'énergie cinétique (12, 60) selon l'une quelconque des revendications précédentes, dans lequel en utilisation normale, la seconde enceinte sous vide (32) est maintenue à une pression entre 10 et 100 mbar et la première enceinte (22) est maintenue à une pression entre 0,1 et 0,01 mbar.

18. Véhicule (10) comprenant un système de récupération d'énergie cinétique (12, 60) selon la revendication 1, comprenant en outre :
un second agencement de pompage par le vide (56) et un agencement de soupapes opérationnels pour une évacuation périodique de la seconde enceinte sous vide (32).

19. Combinaison d'un véhicule (10) et d'une station de base (50) comprenant un système de récupération d'énergie cinétique (12, 60) selon la revendication 1, pour récupérer l'énergie cinétique du véhicule, comprenant en outre :
un agencement de soupapes (38) en communication fluidique avec l'échappement de la seconde enceinte sous vide pour commander l'écoulement de gaz à travers l'échappement ;
une première conduite d'écoulement (52) en aval de l'agencement de soupapes (38) comprenant un premier raccord (54) pour un raccordement étanche sélectif avec une conduite sous vide (58) ou un second agencement de pompage par le vide (56) séparé du véhicule (10), l'agencement de soupapes étant opérationnel, lorsqu'il est raccordé, pour provoquer un écoulement de gaz à travers l'échappement (36) de la seconde enceinte sous vide (32) pour maintenir la seconde enceinte sous vide à une pression inférieure à la pression atmosphérique ;
la station de base (50) comprenant un second agencement de pompage par le vide (56) et une seconde conduite d'écoulement (58) en communication fluidique avec un orifice d'admission (60) du second agencement de pompage par le vide, la seconde conduite d'écoulement comprenant un second raccord (62), les premier et second raccords étant configurés pour former un raccordement étanche de sorte que du gaz puisse s'échapper de la seconde enceinte sous vide à travers les première et seconde conduites d'écoulement lorsque le véhicule est situé au niveau de la station de base.

20. Véhicule (10) comprenant un système de récupération d'énergie cinétique (12, 60) selon la revendication 1, dans lequel, dans un premier état, l'agencement de pompage à volute (24) est opérationnel pour évacuer la première enceinte sous vide (22) et la seconde enceinte sous vide (32) fournit une pression au refoulement pour l'agencement de pompage à volute et, dans un second état, l'agencement de pompage à volute est opérationnel pour évacuer la seconde enceinte sous vide.

21. Procédé de fonctionnement d'un système de récupération d'énergie cinétique (12, 60), le système comprenant :
un volant d'inertie (14) supporté pour une rotation dans une première enceinte sous vide (22) pour recevoir de l'énergie en provenance d'une ou de plusieurs pièces d'un véhicule (10) et dissiper de l'énergie vers celles-ci ;
un agencement de pompage par le vide à volute (24) ayant un orifice d'admission (31) agencé pour être en communication fluidique avec un orifice de refoulement (30) de la première enceinte sous vide (22) pour évacuer la première enceinte sous vide ;
une seconde enceinte sous vide (32) ayant un orifice d'admission (34) en communication fluidique avec un échappement (33) de l'agencement de pompage à volute (24) et agencée pour être maintenue à une pression inférieure à la pression atmosphérique pour réduire la pression au niveau de l'échappement de l'agencement de pompage à volute, la seconde enceinte sous vide comprenant un orifice de refoulement (36) à travers lequel du gaz peut être pompé périodiquement pour maintenir la seconde enceinte sous vide à une pression inférieure à la pression atmosphérique,
dans lequel le procédé comprend l'évacuation périodique de la seconde enceinte sous vide à une pression inférieure à la pression atmosphérique à l'aide soit d'un second agencement de pompage par le vide (56), soit de l'agencement de pompage à volute.

22. Procédé selon la revendication 21, comprenant l'évacuation périodique de la seconde enceinte (32) à une pression entre 10 et 100 mbar et l'évacuation de la première enceinte à une pression entre 0,1 et 0,01 mbar.
